# EUROPEAN PATENT APPLICATION

(11) **EP 4 769 888 A1**
(43) Date of publication of application: **01.07.2026**
(21) Application number: 25867270.8
(22) Date of filing: 02.10.2025
(51) Int. Cl.: H02J 7/00, H01M 10/48, H01M 10/613, H01M 10/44

(54) **RAPID CHARGING DEVICE FOR CHARGING PLURALITY OF BATTERY PACKS AND RAPID CHARGING METHOD USING SAME**

(30) Priority: 02.10.2024 KR 20240133963
(71) Applicant: LG Energy Solution, Ltd., Seoul 07335 (KR)
(72) Inventor: KIM, Hak Soon, Daejeon 34122 (KR); LEE, Jong Woo, Daejeon 34122 (KR); LEE, Chang Hui, Daejeon 34122 (KR); KIM, Jin Su, Daejeon 34122 (KR)
(74) Representative: Plasseraud IP
(86) International application number: PCT/KR2025/095608
(87) International publication number: WO 2026/075542

(57) **Abstract**

Disclosed are a quick charging device for charging a plurality of battery packs and a quick charging method using the same, and more particularly a quick charging device for charging a plurality of battery packs, the quick charging device including a positive electrode high-voltage terminal configured to supply voltage, a negative electrode high-voltage terminal configured to supply voltage, a plurality of DC/AC converters connected to each of the positive electrode high-voltage terminal and the negative electrode high-voltage terminal, a plurality of variable AC autotransformers connected respectively to the plurality of DC/AC converters, each of the variable AC autotransformers being configured to adjust a voltage value, a plurality of AC/DC converters connected respectively to the plurality of variable AC autotransformers, a plurality of resistor modules connected respectively to the plurality of AC/DC converters, and a controller connected to each of the variable AC autotransformers, the controller being configured to control the voltage value of each of the variable AC autotransformers.

## Description

### [Technical Field]

This application claims the benefit of priority to Korean Patent Application No. 2024-0133963 filed on October 2, 2024, the disclosure of which is incorporated herein by reference in its entirety.

The present invention relates to a quick charging device for charging a plurality of battery packs and a quick charging method using the same, and more particularly to a quick charging device for charging a plurality of battery packs capable of easily quickly charging the plurality of battery packs based on the state of each of the plurality of battery packs and a quick charging method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

For electric vehicles, a high-capacity battery pack is mounted therein, wherein, when the high-capacity battery pack is discharged after use, the high-capacity battery pack is generally recharged using a quick charging device for reuse.

Due to large capacity thereof, the high-capacity battery packs require significant time to fully charge at charging speeds used for general smartphones, etc. In order to reduce the charging time, therefore, charging is performed using a quick charging device.

When quick charging is performed using such a quick charging device, high temperatures are generated in the battery pack, causing problems such as reduced battery pack performance and decreased charging efficiency.

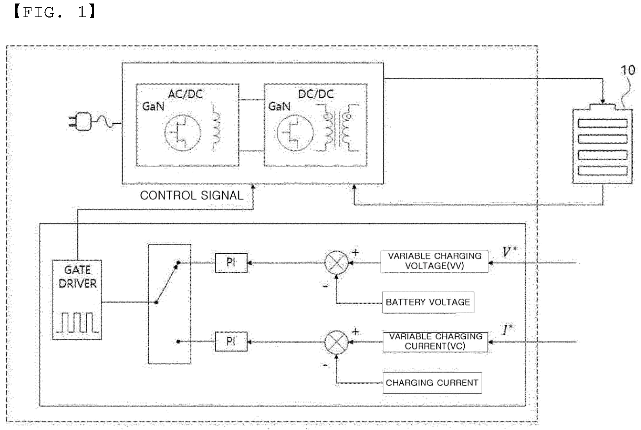

FIG. 1 is a block diagram showing a charging device of a conventional charging system. As shown in FIG. 1, the conventional battery pack charging system includes a variable charging voltage and a variable charging current, wherein a battery pack 10 is electrically connected to the variable charging voltage and variable charging current for charging.

In the conventional battery pack charging system, when quickly charging the battery pack 10, heat is generated in the battery pack 10, and the temperature of the battery pack 10 is controlled by regulating the supplied current and voltage in order to prevent the heat from exceeding a threshold level that could adversely affect charging efficiency.

In this prior art, however, heat generated between charges is reduced by adjusting the current and the voltage, and waiting for the temperature to decrease is required. Consequently, it is difficult to perform control such that the temperature of the battery pack immediately reaches an appropriate temperature or an appropriate temperature range.

In addition, such temperature control may be performed even when the temperature gradually drops after rising to the appropriate temperature or higher. In this case, performance of the battery pack may degrade and charging efficiency of the battery pack may decrease due to high temperatures.

### (Prior Art Document)

(Patent Document 1) Korean Patent Application Publication No. 2023-0166599

### [Disclosure]

### [Technical Problem]

The present invention has been made in view of the above problems, and it is an object of the present invention to provide a quick charging device for charging a plurality of battery packs capable of controlling heat generated in a battery pack during quick charging such that quick charging can be performed at an appropriate temperature and preventing degradation in performance of the battery pack and reduction in charging efficiency of the battery pack between charges and a quick charging method using the same.

### [Technical Solution]

A quick charging device for charging a plurality of battery packs according to the present invention to accomplish the above object includes a positive (+) electrode high-voltage terminal (100) configured to supply voltage, a negative (-) electrode high-voltage terminal (200) configured to supply voltage, a plurality of DC/AC converters (300) connected to each of the positive (+) electrode high-voltage terminal (100) and the negative (-) electrode high-voltage terminal (200), a plurality of variable AC autotransformers (400) connected respectively to the plurality of DC/AC converters (300), each of the variable AC autotransformers being configured to adjust the voltage value, a plurality of AC/DC converters (500) connected respectively to the plurality of variable AC autotransformers (400), a plurality of resistor modules (600) connected respectively to the plurality of AC/DC converters (500), and a controller (700) connected to each of the variable AC autotransformers (400), the controller being configured to control the voltage value of each of the variable AC autotransformers (400).

Also, in the quick charging device according to the present invention, the controller (700) may include a plurality of temperature measurement sensors (710) each configured to measure the temperature of a corresponding one of the plurality of battery packs (P1, P2, and P3).

Also, in the quick charging device according to the present invention, the controller (700) may include a plurality of temperature adjustment units (720) each configured to adjust the temperature of a corresponding one of the plurality of battery packs (P1, P2, and P3).

Also, in the quick charging device according to the present invention, the temperature adjustment unit (720) may have heating and cooling functions.

Also, in the quick charging device according to the present invention, each of the plurality of battery packs (P) may be charged via a charging transient state and a charging steady state such that a target temperature is reached.

Also, in the quick charging device according to the present invention, in the charging transient state, the voltage value of each of the variable AC autotransformers (400) may be fixed and the temperature of each of the battery packs may be controlled through the temperature adjustment unit (720).

Also, in the quick charging device according to the present invention, in the charging steady state, the voltage value of each of the variable AC autotransformers (400) may be adjusted and/or the temperature of each of the battery packs may be controlled through the temperature adjustment unit (720).

Also, in the quick charging device according to the present invention, in the charging transient state, the temperature adjustment unit (720) may perform or stop heating and cooling of each of the plurality of battery packs based on the temperature change rate (dT/dt) over time of the plurality of battery packs (P1, P2, and P3).

Also, in the quick charging device according to the present invention, in the charging steady state, the temperature of each of the battery packs may be controlled based on the voltage value of each of the variable AC autotransformers (400) and/or may be controlled through the temperature adjustment unit (720) based on a predicted temperature value generated by a recursive filter using the past temperature value and the current temperature value of each of the battery packs over time and an allowable temperature range of the target temperature.

Also, in the quick charging device according to the present invention, if the current temperature value is within the allowable temperature range, the voltage value of each of the variable AC autotransformers (400) may be adjusted based on the predicted temperature value to control the temperature of each of the battery packs (P1, P2, and P3), and if the current temperature value is outside of the allowable temperature range, the voltage value may be adjusted and/or the temperature of each of the battery packs may be controlled through the temperature adjustment unit.

Also, in the quick charging device according to the present invention,

In addition, a quick charging method according to the present invention includes a first step of measuring sensing information of at least one of the temperature of each of a plurality of battery packs, the outdoor temperature, the C-rate, and the SoC, a second step of adjusting at least one of the voltage value of a variable AC autotransformer and a temperature adjustment unit based on the sensing information to charge the battery packs, a third step of maintaining a target temperature of each of the plurality of battery packs within an allowable temperature range, and a fourth step of terminating charging upon completion of charging of each of the plurality of battery packs.

Also, in the quick charging method according to the present invention, each of the plurality of battery packs may be charged via a charging transient state and a charging steady state such that the target temperature is reached.

Also, in the quick charging method according to the present invention, in the charging transient state, the voltage value of the variable AC autotransformer may be fixed and the temperature of each of the battery packs may be controlled through the temperature adjustment unit.

Also, in the quick charging method according to the present invention, in the charging steady state, the voltage value of the variable AC autotransformer may be adjusted and/or the temperature of each of the battery packs may be controlled through the temperature adjustment unit.

Also, in the quick charging method according to the present invention, in the charging steady state, the temperature of each of the battery packs may be controlled based on the voltage value of the variable AC autotransformer and/or may be controlled through the temperature adjustment unit based on a predicted temperature value generated by a recursive filter using the past temperature value and the current temperature value of each of the battery packs over time and an allowable temperature range of the target temperature.

### [Advantageous Effects]

As is apparent from the above description, a quick charging device for charging a plurality of battery packs according to the present invention and a quick charging method using the same have the advantage of charging a battery pack within an allowable temperature range of a target temperature when charging the battery pack using a variable AC autotransformer capable of adjusting the voltage value and a temperature adjustment unit, thereby maintaining battery pack charging efficiency.

In addition, the quick charging device for charging the plurality of battery packs according to the present invention and the quick charging method using the same have the advantage of cooling the battery pack through voltage value adjustment of the variable AC autotransformer and the temperature adjustment unit when the temperature of the battery pack rises and exceeds the allowable temperature range, thereby preventing degradation in performance of the battery pack due to high temperatures.

### [Description of Drawings]

FIG. 1 is a block diagram showing a charging device of a conventional charging system.
FIG. 2 is a schematic view showing a quick charging device according to an embodiment of the present invention.
FIG. 3 is a graph showing the temperature change over time of a battery pack when using the quick charging device according to the embodiment of the present invention.
FIG. 4 is a flowchart showing a quick charging method of charging a battery pack according to an embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a quick charging device for charging a plurality of battery packs according to the present invention and a quick charging method using the same will be described with reference to the accompanying drawings.

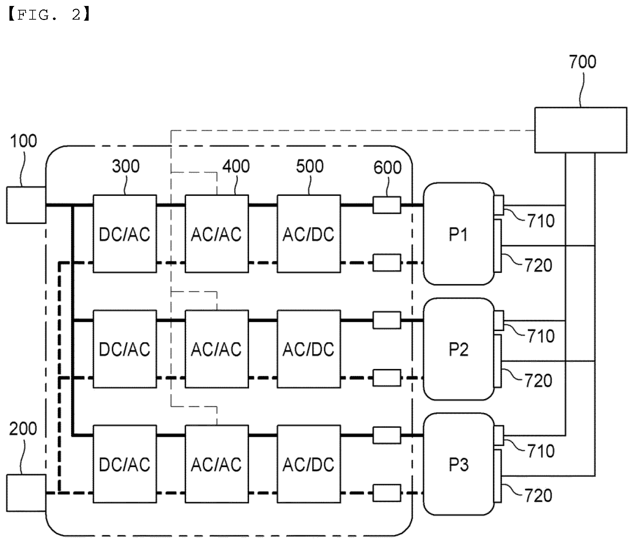

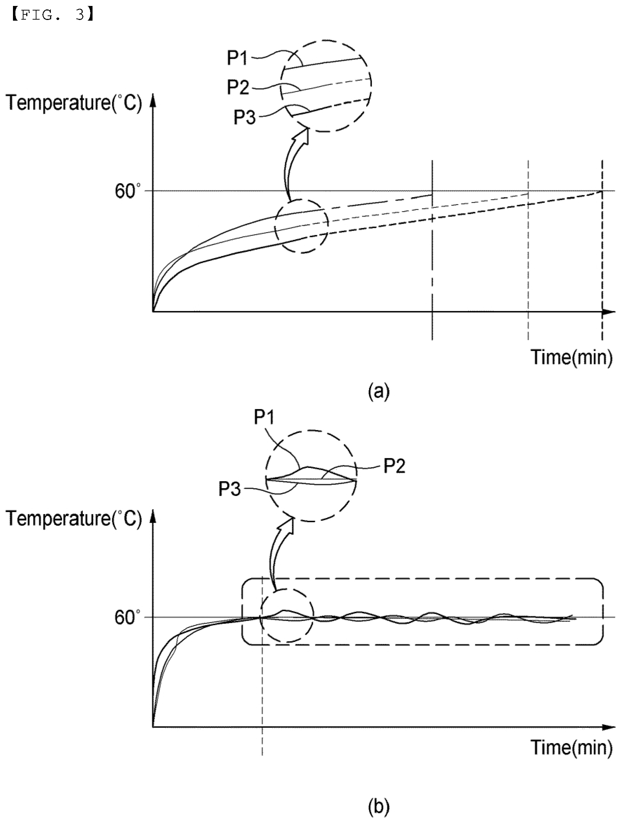

FIG. 2 is a schematic view showing a quick charging device according to an embodiment of the present invention, and FIG. 3 is a graph showing the temperature change over time of a battery pack when using the quick charging device according to the embodiment of the present invention.

Referring to FIGs. 2 and 3, the quick charging device according to the preferred embodiment of the present invention includes a positive (+) electrode high-voltage terminal 100, a negative (-) electrode high-voltage terminal 200, a DC/AC converter 300, a variable AC autotransformer 400, an AC/DC converter 500, a resistor module 600, and a controller 700.

First, the positive (+) electrode high-voltage terminal 100 is connected to battery packs P1, P2, and P3 via the DC/AC converter 300 to supply voltage thereto such that the battery packs P1, P2, and P3 are quickly charged.

The positive (+) electrode high-voltage terminal 100 is connected to a plurality of DC/AC converters 300 via electric wires diverging therefrom, and supplies a constant voltage to quickly charge the battery packs P1, P2, and P3.

The negative (-) electrode high-voltage terminal 200 is connected to the battery packs P1, P2, and P3 via the DC/AC converter 300 to supply voltage thereto such that the battery packs P1, P2, and P3 are quickly charged.

The negative (-) electrode high-voltage terminal 200 is connected to the plurality of DC/AC converters 300 via electric wires diverging therefrom, and supplies a constant voltage to quickly charge the battery packs P1, P2, and P3.

The positive (+) electrode high-voltage terminal 100 and the negative (-) electrode high-voltage terminal 200 form means configured to charge the battery packs P1, P2, and P3, whereby parallel control is easily performed during charging, and even if one of the high-voltage terminals fails, it is possible to reduce damage due to failure by the provision of the other high-voltage terminal.

Next, the DC/AC converter 300 is configured to convert direct current (DC) power supplied from the positive (+) electrode high-voltage terminal 100 and the negative (-) electrode high-voltage terminal 200 into alternating current (AC) power, wherein one side of the DC/AC converter is connected to each of the positive (+) electrode high-voltage terminal 100 and the negative (-) electrode high-voltage terminal 200, and the other side of the DC/AC converter is connected to the variable AC autotransformer 400.

The DC/AC converter 300 converts direct current (DC) power into alternating current (AC) power such that the voltage value can be easily adjusted by the variable AC autotransformer 400 connected to the other side thereof.

The variable AC autotransformer 400 is configured to adjust the voltage value received from the DC/AC converter 300, wherein one side of the variable AC autotransformer is connected to the DC/AC converter 300, and the other side of the variable AC autotransformer is connected to the AC/DC converter 500.

The variable AC autotransformer 400 may be provided in plural, wherein the plurality of variable AC autotransformers may correspond to the plurality of DC/AC converters 300, respectively, and may individually adjust voltage values through the plurality of DC/AC converters 300.

Meanwhile, the variable AC autotransformer 400 may regulate voltage by physically moving a slider provided therein to vary the voltage distribution according to the position of the slider, and is not particularly restricted as long as it is possible to adjust the voltage value.

Next, the AC/DC converter 500 is configured to convert the alternating current (AC) power received from the variable AC autotransformer 400 connected to one side thereof into direct current (DC) power such that the battery packs P1, P2, and P3 can be charged.

Meanwhile, the AC/DC converter 500 is provided in plural so as to correspond to the plurality of variable AC autotransformers 400, respectively, and the resistor module 600 is connected to the other side of each of the AC/DC converters.

The resistor module 600 is a module having a fixed voltage value, wherein one side of the resistor module is connected to the AC/DC converter 500, and the other side of the resistor module is connected to the battery pack P1, P2, and P3.

The resistor module 600 reduces the voltage value received through the AC/DC converter 500 by a certain level using the fixed voltage value thereof to suppress overheating in the battery packs P1, P2, and P3 caused by excessive voltage value when the battery packs P1, P2, and P3 are charged.

The controller 700 is configured to check the charging state of the quick charging device, to adjust the temperature of the battery packs P1, P2, and P3, and to adjust the charging speed, and includes a temperature measurement sensor 710 and a temperature adjustment unit 720.

The controller 700 is connected to each of the plurality of variable AC autotransformers 400, and may adjust the voltage value of the each of the variable AC autotransformers 400.

In addition, the controller 700 is individually connected to the plurality of variable AC autotransformers 400, and may differently set the voltage values flowing through the variable AC autotransformers 400.

The controller 700 may measure the real-time temperature of the battery packs P1, P2, and P3 through the temperature measurement sensor 710, and the temperature measurement sensor 710 may be provided so as to be correspond to each of the battery packs P1, P2, and P3 in order to measure the temperature of each of the battery packs P1, P2, and P3.

Here, the temperature measurement sensor 710 may be an attachment type sensor attached to each of the battery packs P1, P2, and P3 in tight contact therewith, as shown in FIG. 2, or a measurement sensor using an infrared camera, and the temperature measurement sensor is not particularly restricted as long as it is possible to measure the temperature of each of the battery packs P1, P2, and P3.

The temperature adjustment unit 720 of the controller 700 has heating and cooling functions, and is located so as to be attached to each of the plurality of battery packs P1, P2, and P3 in order to control the temperature of each of the battery packs P1, P2, and P3.

The temperature adjustment unit 720 may, for example, be a pad type temperature adjustment unit, as shown in FIG. 2, and the type of the temperature adjustment unit is not particularly restricted as long as the temperature adjustment unit has heating and cooling functions to control the temperature of each of the battery packs P1, P2, and P3, and a pocket type temperature adjustment unit may be used.

When controlling the temperature of each of the battery packs P1, P2, and P3 using the heating and cooling functions of the temperature adjustment unit 720, the temperature adjustment unit 720 may operate and stop by predicting the temperature change over time of the battery packs P1, P2, and P3 through a recursive filter based on at least one of the outdoor temperature, the C-rate, and the SoC.

Since the temperature adjustment unit 720 has heating and cooling functions, it is possible to control the temperature through the heating and cooling functions even when problems occur with the variable AC autotransformers 400, whereby the voltage value cannot be adjusted and it is difficult to control the temperature of each of the battery packs P1, P2, and P3.

The controller 700 controls a charging process using the current temperature value of each of the battery packs P1, P2, and P3 sensed through the temperature measurement sensor 710 such that each of the battery packs P1, P2, and P3 can reach a target temperature.

The target temperature is 60°C, at which charging efficiency of each of the battery packs P1, P2, and P3 is high, and an allowable temperature range is the target temperature ± 3°C. If the temperature of each of the battery packs P1, P2, and P3 is lower than the allowable temperature range, quick charging efficiency may decrease, and if the temperature of each of the battery packs P1, P2, and P3 is higher than the allowable temperature range, quick charging efficiency may decrease and the performance of the battery packs P1, P2, and P3 may degrade.

In addition, each of the plurality of battery packs P1, P2, and P3 is charged via a charging transient state and a charging steady state until the target temperature is reached under control of the controller 700. The charging transient state refers to a charging state in which the temperature of each of the battery packs P1, P2, and P3 is outside of the allowable temperature range, and the charging steady state refers to a charging state in which the temperature of each of the battery packs P1, P2, and P3 is within the allowable temperature range.

In the charging transient state, the controller 700 fixes the voltage value of each of the variable AC autotransformers 400 and controls the temperature of each of the battery packs P1, P2, and P3 through the temperature adjustment unit 720.

More specifically, when the temperature of each of the battery packs P1, P2, and P3 is lower than the allowable temperature range in the charging transient state, the controller 700 fixes the voltage value of each of the variable AC autotransformers 400 and heats the battery packs P1, P2, and P3 using the heating function of the temperature adjustment unit 720 such that the temperature of each of the battery packs P1, P2, and P3 is within the allowable temperature range.

In addition, when the temperature of each of the battery packs P1, P2, and P3 is higher than the allowable temperature range in the charging transient state, the controller 700 fixes the voltage value of each of the variable AC autotransformers 400 and cools the battery packs P1, P2, and P3 using the cooling function of the temperature adjustment unit 720 such that the temperature of each of the battery packs P1, P2, and P3 is within the allowable temperature range.

Meanwhile, in the charging transient state, the temperature adjustment unit 720 may perform or stop heating and cooling of each of the plurality of battery packs P1, P2, and P3 based on the temperature change rate over time (dT/dt) of the plurality of battery packs P1, P2, and P3, which provides the advantage of individually managing each of the battery packs P1, P2, and P3.

Furthermore, in the charging steady state, the voltage value of each of the variable AC autotransformers 400 is adjusted, and the temperature of each of the battery packs P1, P2, and P3 is controlled through the heating and cooling functions of the temperature adjustment unit 720.

When the voltage values of the variable AC autotransformers 400 are adjusted and/or the temperature of each of the battery packs P1, P2, and P3 is controlled through the temperature adjustment unit 720 in the charging steady state, control may be performed based on changes in the temperature value sensed by the temperature measurement sensor 710.

More specifically, the voltage values of the variable AC autotransformers 400 may be adjusted and the heating and cooling functions of the temperature adjustment unit 720 may be performed or stopped to control the temperature of each of the battery packs P1, P2, and P3 such that the temperature can be controlled based on a predicted temperature value generated by the recursive filter using the past temperature value and the current temperature value of each of the battery packs P1, P2, and P3 over time measured by the temperature measurement sensor 710 and the allowable temperature range of the target temperature, 60±3°C.

If the current temperature value measured by the temperature measurement sensor 710 is within the allowable temperature range, the voltage values of the variable AC autotransformers 400 are adjusted based on the predicted temperature value. Accordingly, the current value is adjusted to control the temperature of each of the battery packs P1, P2, and P3.

Furthermore, if the current temperature value measured by the temperature measurement sensor 710 is outside of the allowable temperature range, adjustment of the voltage values of the variable AC autotransformers 400 and/or temperature control using the heating and cooling functions of the temperature adjustment unit 720 may be performed.

When describing the embodiment of the present invention with reference to FIG. 3, if the current temperature value of each of the battery packs P1, P2, and P3 measured by the temperature measurement sensor 710 is within the allowable temperature range, the voltage values of the variable AC autotransformers 400 are adjusted such that the current temperature value converges to the target temperature of 60°C.

More specifically, if the current temperature value is more than 60°C to 63°C, the voltage value of each of the variable AC autotransformers 400 is decreased to lower the current value, inducing a corresponding temperature decrease such that the current temperature value converges to the target temperature of 60°C.

On the other hand, if the current temperature value is 57°C to less than 60°C, the voltage value of each of the variable AC autotransformers 400 is increased to increase the current value, inducing a corresponding temperature increase such that the current temperature value converges to the target temperature of 60°C.

Meanwhile, if the current temperature value of each of the battery packs P1, P2, and P3 exceeds 63°C and is outside of the allowable temperature range, the voltage value of each of the variable AC autotransformers 400 is decreased to lower the current value, and the cooling function of the temperature adjustment unit 720 is performed such that the current temperature value falls within the allowable temperature range.

At this time, the voltage value of each of the variable AC autotransformers 400 and the setting value for performing the cooling function of the temperature adjustment unit 720 are set based on the predicted temperature value obtained by applying the past temperature value and the current temperature value to the recursive filter.

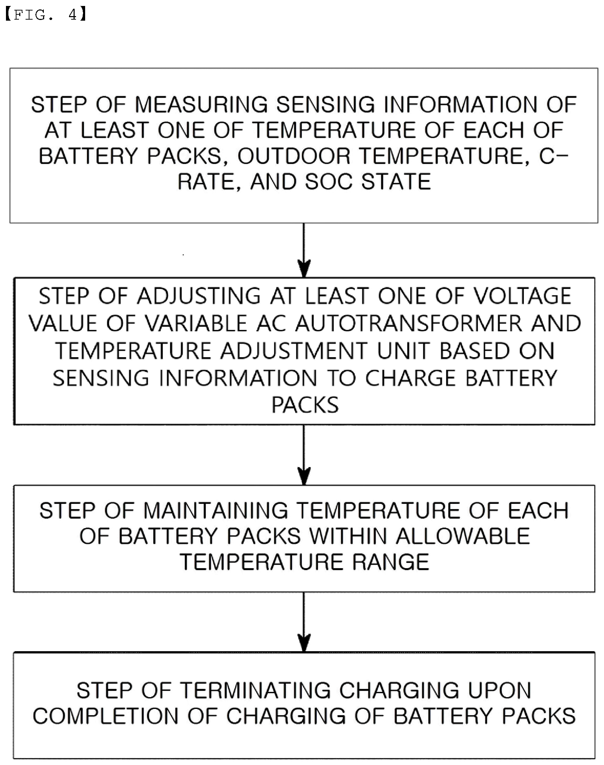

FIG. 4 is a flowchart showing a quick charging method of charging a battery pack according to an embodiment of the present invention.

Referring to FIG. 4, a method of quickly charging a plurality of battery packs using a quick charging device according to a preferred embodiment of the present invention includes a first step of measuring sensing information of at least one of the temperature of each of the plurality of battery packs, the outdoor temperature, the C-rate, and the SoC, a second step of adjusting at least one of the voltage value of a variable AC autotransformer and a temperature adjustment unit based on the sensing information to charge the battery packs, a third step of maintaining the temperature of each of the plurality of battery packs within an allowable temperature range, and a fourth step of terminating charging upon completion of charging of each of the plurality of battery packs.

The first step of measuring sensing information of at least one of the temperature of each of the plurality of battery packs, the outdoor temperature, the C-rate, and the SoC is a step of measuring sensing information of at least one of the temperature of each of the plurality of battery packs, the outdoor temperature, the C-rate, and the SoC using a controller.

The controller determines whether temperature control is necessary for the battery packs based on the sensing information.

The second step of adjusting at least one of the voltage value of the variable AC autotransformer and the temperature adjustment unit based on the sensing information to charge the battery packs is a step of performing control such that each of the battery packs is charged at a target temperature while adjusting at least one of the voltage value of the variable AC autotransformer and the temperature adjustment unit based on the determination as to whether temperature control is necessary in the first step.

At this time, each of the plurality of battery packs is charged via a charging transient state and a charging steady state until the target temperature is reached. As described above, the charging transient state refers to a charging state in which the temperature of each of the battery packs P1, P2, and P3 is outside of the allowable temperature range, and the charging steady state refers to a charging state in which the temperature of each of the battery packs P1, P2, and P3 is within the allowable temperature range.

In the charging transient state, the voltage value of the variable AC autotransformer is fixed and the temperature of each of the battery packs is controlled using the heating and cooling functions of the temperature adjustment unit based on the sensing information.

Of course, it is also possible to control the temperature of each of the battery packs using the temperature adjustment unit while adjusting the voltage value of the variable AC autotransformer as needed.

As an example, when each of the battery packs is in the charging transient state and the temperature of each of the battery packs is lower than the allowable temperature range, the voltage value of the variable AC autotransformer may be fixed, and the temperature of each of the battery packs may be controlled using the heating function of the temperature adjustment unit such that the temperature of each of the battery packs is within the allowable temperature range.

At this time, it is also possible to increase the voltage value of the variable AC autotransformer, thereby increasing the current supplied to each of the battery packs and increasing heat generated in each of the battery packs due to charging such that the temperature of each of the battery packs is within the allowable temperature range.

Here, the target temperature at which charging efficiency of the battery pack can be optimally maintained is 60°C, and the allowable temperature range is 60±3°C, at which charging efficiency of the battery pack is relatively stable and degradation in performance of the battery pack is inhibited.

The third step of maintaining the temperature of each of the plurality of battery packs within the allowable temperature range is a step of adjusting the voltage value of the variable AC autotransformer and/or controlling the temperature of each of the plurality of battery packs using the temperature adjustment unit such that the temperature of each of the plurality of battery packs is maintained within the allowable temperature range while continuously performing quick charging of each of the battery packs in the charging steady state.

In order to maintain the temperature of each of the plurality of battery packs within the allowable temperature range in the charging steady state, the voltage value of the variable AC autotransformer is adjusted and/or the temperature of each of the plurality of battery packs is controlled using heating and cooling functions of the temperature adjustment unit such that a predicted temperature value generated by the recursive filter using the past temperature value and the current temperature value of each of the battery packs over time is maintained within the allowable temperature range of the target temperature.

Those skilled in the art to which the present invention pertains will appreciate that various applications and modifications are possible within the category of the present invention based on the above description.

### (Description of Reference Symbols)

100: Positive (+) electrode high-voltage terminal
200: Negative (-) electrode high-voltage terminal
300: DC/AC converter
400: Variable AC autotransformer
500: AC/DC converter
600: Resistor module
700: Controller
710: Temperature measurement sensor
720: Temperature adjustment unit
P1, P2, P3: Battery pack

## Claims

1. A quick charging device for charging a plurality of battery packs, the quick charging device comprising:
a positive electrode high-voltage terminal configured to supply voltage;
a negative electrode high-voltage terminal configured to supply voltage;
a plurality of DC/AC converters connected to each of the positive electrode high-voltage terminal and the negative electrode high-voltage terminal;
a plurality of variable AC autotransformers connected respectively to the plurality of DC/AC converters, each of the variable AC autotransformers being configured to adjust a voltage value;
a plurality of AC/DC converters connected respectively to the plurality of variable AC autotransformers;
a plurality of resistor modules connected respectively to the plurality of AC/DC converters; and
a controller connected to each of the variable AC autotransformers, the controller being configured to control the voltage value of each of the variable AC autotransformers.

2. The quick charging device according to claim 1, wherein the controller comprises a plurality of temperature measurement sensors each configured to measure a temperature of a corresponding one of the plurality of battery packs.

3. The quick charging device according to claim 2, wherein the controller comprises a plurality of temperature adjustment units each configured to adjust the temperature of a corresponding one of the plurality of battery packs.

4. The quick charging device according to claim 3, wherein the temperature adjustment unit has heating and cooling functions.

5. The quick charging device according to claim 4, wherein each of the plurality of battery packs is charged via a charging transient state and a charging steady state such that a target temperature is reached.

6. The quick charging device according to claim 5, wherein, in the charging transient state, the voltage value of each of the variable AC autotransformers is fixed and the temperature of each of the battery packs is controlled through the temperature adjustment unit.

7. The quick charging device according to claim 5, wherein, in the charging steady state, the voltage value of each of the variable AC autotransformers is adjusted and/or the temperature of each of the battery packs is controlled through the temperature adjustment unit.

8. The quick charging device according to claim 6, wherein, in the charging transient state, the temperature adjustment unit performs or stops heating and cooling of each of the plurality of battery packs based on a temperature change rate over time of the plurality of battery packs.

9. The quick charging device according to claim 7, wherein, in the charging steady state, the temperature of each of the battery packs is controlled based on the voltage value of each of the variable AC autotransformers and/or is controlled through the temperature adjustment unit based on a predicted temperature value generated by a recursive filter using a past temperature value and a current temperature value of each of the battery packs over time and an allowable temperature range of the target temperature.

10. The quick charging device according to claim 9, wherein
if the current temperature value is within the allowable temperature range, the voltage value of each of the variable AC autotransformers is adjusted based on the predicted temperature value to control the temperature of each of the battery packs, and
if the current temperature value is outside of the allowable temperature range, the voltage value is adjusted and/or the temperature of each of the battery packs is controlled through the temperature adjustment unit.

11. The quick charging device according to claim 7, wherein the cooling and heating functions of the temperature adjustment unit are performed or stopped by predicting a temperature change over time of each of the battery packs based on at least one of an outdoor temperature, a C-rate, and an SoC.

12. A quick charging method of charging a plurality of battery packs using a quick charging device, the quick charging method comprising:
a first step of measuring sensing information of at least one of a temperature of each of the plurality of battery packs, an outdoor temperature, a C-rate, and an SoC;
a second step of adjusting at least one of a voltage value of a variable AC autotransformer and a temperature adjustment unit based on the sensing information to charge the battery packs;
a third step of maintaining a target temperature of each of the plurality of battery packs within an allowable temperature range; and
a fourth step of terminating charging upon completion of charging of each of the plurality of battery packs.

13. The quick charging method according to claim 12, wherein each of the plurality of battery packs is charged via a charging transient state and a charging steady state such that the target temperature is reached.

14. The quick charging method according to claim 13, wherein, in the charging transient state, the voltage value of the variable AC autotransformer is fixed and the temperature of each of the battery packs is controlled through the temperature adjustment unit.

15. The quick charging method according to claim 13, wherein, in the charging steady state, the voltage value of the variable AC autotransformer is adjusted and/or the temperature of each of the battery packs is controlled through the temperature adjustment unit.

16. The quick charging method according to claim 15, wherein, in the charging steady state, the temperature of each of the battery packs is controlled based on the voltage value of the variable AC autotransformer and/or is controlled through the temperature adjustment unit based on a predicted temperature value generated by a recursive filter using a past temperature value and a current temperature value of each of the battery packs over time and an allowable temperature range of the target temperature.
